# EUROPEAN PATENT APPLICATION

(11) **EP 4 154 709 A1**
(43) Date of publication of application: **29.03.2023**
(21) Application number: 22192898.9
(22) Date of filing: 30.08.2022
(51) Int. Cl.: A01M 1/04

(54) **PEST EXTERMINATION DEVICE, PEST EXTERMINATION METHOD, AND PEST EXTERMINATION SYSTEM**

(30) Priority: 27.09.2021 JP 2021156361
(71) Applicant: Ushio Denki Kabushiki Kaisha, Tokyo-to 100-8150 (JP)
(72) Inventor: NAITO, Keisuke, Tokyo, 100-8150 (JP)
(74) Representative: Tomerius, Isabel

(57) **Abstract**

A pest extermination device (100) includes an insect attracting section (110) that emits an attracting element that attracts an insect to be exterminated, a light source section that emits ultraviolet light having a wavelength of 190 nm or more and less than 240 nm to the insect attracting section (110) and at least part of its surrounding area, and a controller (16) that controls the lighting of the light source section. The pest extermination device (100) also includes a light source section that emits ultraviolet light having a wavelength of 190 nm or more and less than 240 nm, a supporter that supports the light source section such that a fixed area where an insect to be exterminated can come and go and/or settle is irradiated with the ultraviolet light, and a controller (16) that controls the lighting of the light source section.

## Description

### CROSS-REFERENCE TO RELATED APPLICATION(S)

This application claims priority from Japanese Patent Application No. 2021-156361 filed September 27, 2021. The entire teachings of the above application are incorporated herein by reference.

### Technical Field

The present invention relates to a pest extermination device, a pest extermination method, and a pest extermination system that use ultraviolet light irradiation to exterminate pests.

### Background Art

Insecticides have conventionally been used to exterminate pests in the environment. However, insecticides are harmful to human bodies, and it is difficult to maintain their insecticidal effects for a long period of time. On the other hand, the use of ultraviolet light has been considered to achieve insecticidal effects. For example, Non-Patent Literature 1 discloses that the insecticidal effects can be obtained by irradiating pests with ultraviolet light having a main wavelength of 254 nm emitted from a germicidal lamp (low-pressure mercury vapor lamp).

### Citation List

### Non-Patent Literature

Non-Patent Literature 1: Norihisa Okamoto, "The action mechanism on the directly or indirectly lethal effects of UV radiation in cockroaches and two tests of cockroach control with UV radiation in the German cockroach", Journal of the Society of Pestology, Vol. 12, No. 1, page 1-8, 1997

### Summary of the Invention

### Technical Problem

However, the conventional pest extermination using ultraviolet light has a problem in practical use because its insecticidal effects are considered to be limited and the ultraviolet light having a main wavelength of 254 nm emitted from the germicidal lamps is harmful to human bodies. Meanwhile, blue light having a wavelength of 410 nm, for example, is reported to have a higher insecticidal effect than ultraviolet light having a wavelength of 365 nm. However, strong blue light adversely affects human eyes, making it difficult to use in a manned environment. Hence, it is an object of the present invention to provide a pest extermination device, a pest extermination method, and a pest extermination system that can effectively achieve insecticidal effects while reducing harmfulness to human bodies.

### Solution to Problem

In order to solve the above problem, an aspect of the pest extermination device of the present invention includes an insect attracting section that emits an attracting element that attracts an insect to be exterminated, a light source section that emits ultraviolet light having a wavelength of 190 nm or more and less than 240 nm to the insect attracting section and at least part of its surrounding area, and a controller that controls the lighting of the light source section.

The present inventor has found that light having a wavelength of 190 nm or more and less than 240 nm has a higher insecticidal effect than conventional ultraviolet light having a wavelength of 254 nm. The reason for this is presumably that ultraviolet light having a wavelength of 190 nm or more and less than 240 nm acts more effectively on a cuticle layer covering the insect's body surface than ultraviolet light having a wavelength of 254 nm. Irradiating an insect to be exterminated (a pest) with ultraviolet light having a wavelength of 190 nm or more and less than 240 nm can suitably exterminate a pest. In addition, since the insect attracting section that attracts a pest and at least part of its surrounding area are irradiated with the above-mentioned ultraviolet light, a pest that has been attracted is suitably irradiated with the ultraviolet light. Furthermore, ultraviolet light having a wavelengths of 190 nm or more and less than 240 nm is ultraviolet light that has little adverse effect on human bodies. Therefore, this configuration effectively achieves insecticidal effects while reducing harmfulness to human bodies.

In the above pest extermination device, the insect attracting section may include an attracting emission body whose main emission band is contained in a wavelength band of 300 nm to 400 nm, or a wavelength band of 450 nm to 550 nm. In this case, the phototaxis of insects to be exterminated can be used to suitably attract the insects.

Further, in the above-mentioned pest extermination device, the controller may control the lighting of the light source section such that the light source section emits the ultraviolet light at least during a period when the insect attracting section emits the attracting element. In this case, the ultraviolet light can be suitably radiated to the pest that has been attracted by the insect attracting section. In addition, this method eliminates the need for the light source section to be constantly driven, thus extending the service life of the ultraviolet light source.

In the above pest extermination device, the insect attracting section may intermittently emit the attracting element. This method prevents the insect attracting section from attracting too many pests.

Furthermore, in the above pest extermination device, the light source section and the insect attracting section may be mounted inside a shipping container for transporting cargos, and the controller may control the lighting of the light source section such that the light source section emits the ultraviolet light during the transportation process of the shipping container. This configuration can exterminate pests that have entered a shipping container with cargos. Hence, this configuration can suppress, for example, foreign organisms such as fire ants and mosquitoes carrying diseases from establishing themselves in the country.

In addition, an aspect of the pest extermination device according to the present invention includes a light source section that emits ultraviolet light having a wavelength of 190 nm or more and less than 240 nm, a supporter that supports the light source section such that a fixed area where insects to be exterminated can come and go and/or settle is irradiated with the ultraviolet light, and a controller that controls the lighting of the light source section. In this way, irradiating a fixed area where insects to be exterminated (pests) can come and go and/or settle with the ultraviolet light having a wavelength of 190 nm or more and less than 240 nm enables the pests that come and go or settle in the fixed area to be irradiated with ultraviolet light, thereby suitably exterminating the pests. Furthermore, ultraviolet light having a wavelength of 190 nm or more and less than 240 nm is ultraviolet light that has little adverse effect on human bodies. Therefore, this configuration effectively achieves insecticidal effects while reducing harmfulness to human bodies.

In addition, in the above pest extermination device, the supporter may support the light source section such that the fixed area provided in outdoor areas or semi-outdoor areas is irradiated with the ultraviolet light. This configuration enables pests that are present outdoor areas or semi-outdoor areas to be irradiated with the ultraviolet light, exterminating them. In the above pest extermination device, the supporter may support the light source section such that the fixed area including a heat dissipation area whose temperature is higher than outside air temperature is irradiated with the ultraviolet light. This configuration enables the ultraviolet light to be radiated to the heat dissipation area where pests are likely to settle, thus suitably exterminating the pests.

Furthermore, in the above pest extermination device, the fixed area may include a through-hole communicating an indoor area with an outdoor area, and the supporter may support the light source section such that the opening of the through-hole and at least part of the interior of the through-hole are irradiated with the ultraviolet light. For example, through-holes communicating an indoor area with an outdoor area including windows (windows that people do not enter or exit), ventilation openings, air vents, and drainage openings in residential facilities or the like, may serve as entry pathways for pests. Irradiating the entrances, exits, or interiors of such pest entry pathways with the ultraviolet light enables pests passing through these pest entry pathways to be irradiated with the ultraviolet light, exterminating them.

In the above pest extermination device, the fixed area may include a wall surface, and the supporter may support the light source section such that the wall surface is irradiated with the ultraviolet light. This configuration enables pests that settle on the wall surface to be suitably irradiated with the ultraviolet light, exterminating them. This suppresses scenery from being ruined when display items such as posters hang on a wall surface.

Furthermore, in the above pest extermination device, the fixed area may include a window surface, and the supporter may support the light source section such that the window surface is irradiated with the ultraviolet light. In this case, the ultraviolet light can be suitably radiated to the pests that settle on the window surface to exterminate them.

In addition, the above pest extermination device may further include a detector that detects a person present in an irradiation area of the ultraviolet light emitted from the light source section, and the controller may control the lighting of the light source section such that when the detector detects the presence of a person, the amount of ultraviolet light emitted from the light source section is reduced compared to the case in which the detector detects no presence of a person, or the radiation of the ultraviolet light from the light source section is stopped. This case makes it possible to safely exterminate pests against a person in the range of human activities. Moreover, when no person is present in the ultraviolet light irradiation area, the amount of ultraviolet light emitted from the light source section can be increased, thereby more effectively exterminating pests.

Furthermore, in the above pest extermination device, the controller may control the lighting of the light source section such that the ultraviolet light is emitted from the light source section at a predetermined timing when the insects can be present within the irradiation area of the ultraviolet light. In this case, for example, the ultraviolet light can be emitted during nighttime hours when pests are highly active. This enables the ultraviolet light to be more suitably radiated to pests. The predetermined timing may include a timing in which an operating time is set, and a timing in which a reference value for environmental elements (temperature, humidity, brightness, etc.) is set and an operation starts when the reference value is exceeded. In this case, a sensor that detects the environmental elements may be mounted.

In addition, an aspect of the pest extermination method according to the present invention may include a step of emitting an attracting element that attracts an insect to be exterminated from an insect attracting body, and a step of irradiating the insect attracting body and its surrounding area with ultraviolet light having a wavelength of 190 nm or more and less than 240 nm. In this way, irradiating insects to be exterminated (pests) with the ultraviolet light having a wavelength of 190 nm or more and less than 240 nm can suitably exterminate the pests. In addition, since the insect attracting body that attracts pests and at least part of its surrounding area are irradiated with the above ultraviolet light, the pests that have been attracted are suitably irradiated with the ultraviolet light. Furthermore, ultraviolet light having a wavelengths of 190 nm or more and less than 240 nm is ultraviolet light that has little adverse effect on human bodies. Therefore, this method effectively achieves insecticidal effects while reducing harmfulness to human bodies.

Furthermore, an aspect of the pest extermination system according to the present invention may include an insect attracting body emitting an attracting element that attracts insects to be exterminated, and an ultraviolet light irradiation device that irradiates the insect attracting body and at least part of its surrounding area with ultraviolet light having a wavelength of 190 nm or more and less than 240 nm. In this way, irradiating an insect to be exterminated (pest) with ultraviolet light having a wavelength of 190 nm or more and less than 240 nm can suitably exterminate the pest. In addition, since the insect attracting body that attracts pests and at least part of its surrounding area are irradiated with the above ultraviolet light, the pests that have been attracted are suitably irradiated with the ultraviolet light. Furthermore, ultraviolet light having a wavelengths of 190 nm or more and less than 240 nm is ultraviolet light that has little adverse effect on human bodies. Therefore, this configuration effectively achieves insecticidal effects while reducing harmfulness to human bodies.

In the above pest extermination system, the insect attracting body may include at least one of a lighting fixture, a vending machine, or a window surface transmitting visible light. In this case, ultraviolet light can be radiated to pests that have approached in a manner to be attracted by light emitted from a lighting fixture, a vending machine, or a window surface, thereby exterminating them.

Furthermore, an aspect of the shipping container according to the present invention is a shipping container for transporting cargos, and includes a light source section that is mounted inside an housing space in which the cargos are housed and that emits ultraviolet light having a wavelength of 190 nm or more and less than 240 nm, and a controller that controls the lighting of the light source section. This configuration can exterminate pests that have accidentally entered the shipping container with cargos. Hence this configuration can suppress, for example, foreign organisms such as fire ants and mosquitoes carrying diseases from establishing themselves in the country.

The above-mentioned shipping container may further include an insect attracting section that is mounted in the housing space and that emits an attracting element that attracts insects to be exterminated, and the light source section may emit ultraviolet light to the insect attracting section and at least part of its surrounding area. This configuration enables pests that have entered the shipping container to be attracted by the insects attracting section and the attracted pests to be suitably irradiated with the ultraviolet light.

### Advantageous Effects of Invention

One aspect of the present invention can effectively achieve insecticidal effects while reducing harmfulness to human bodies.

### Brief Description of Drawings

FIG. 1 is an appearance view of a pest extermination device (ultraviolet light irradiation device) according to the present embodiment.
FIG. 2 is a schematic diagram of the device used in experiments to confirm insecticidal extermination effects of ultraviolet light.
FIG. 3 is a graph indicating a relationship between an amount of ultraviolet light irradiation and the mortality rate of mosquitoes.
FIG. 4 is a graph indicating a change in the mortality rate of mosquitoes after irradiation with ultraviolet light having a wavelength of 222 nm.
FIG. 5 is a graph indicating a change in the mortality rate of mosquitoes after irradiation with ultraviolet light having a wavelength of 254 nm.
FIG. 6 is a schematic diagram illustrating the structure of cuticles.
FIG. 7 is a graph illustrating the ultraviolet light absorption spectra on DNA and proteins.
FIG. 8 is an example of the configuration of a pest extermination system.
FIG. 9 is an example of the configuration of a pest extermination system.
FIG. 10 is an example of the configuration of a pest extermination system.
FIG. 11 is an example of the configuration of a pest extermination system.
FIG. 12 is an example of the configuration of a pest extermination system.
FIG. 13 is an example of the configuration of a pest extermination system.
FIG. 14 is an example of the configuration of a pest extermination system.

### Description of Embodiments

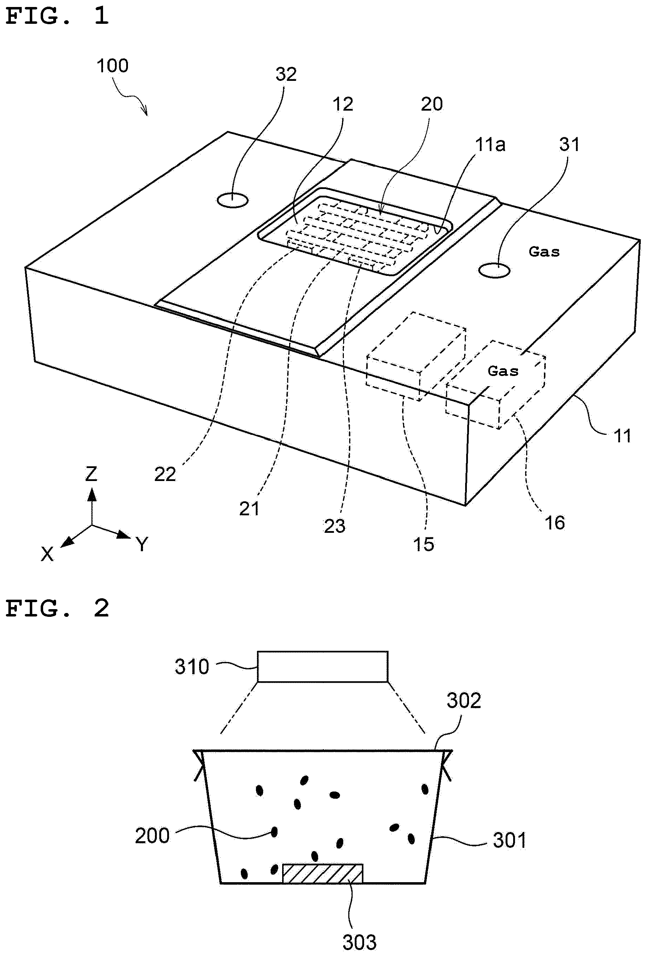

Hereinafter, embodiments of the present invention will now be described with reference to the drawings. FIG. 1 is an appearance view of an ultraviolet light irradiation device 100 according to the present embodiment. The ultraviolet light irradiation device 100 is a pest extermination device that irradiates insects to be exterminated (hereinafter referred to as "pests") with ultraviolet light to kill the pests. The ultraviolet light irradiation device 100 irradiates pests with ultraviolet light having a wavelength of 190 nm to 240 nm, which has little adverse effect on the cells of humans and animals, to kill them.

As shown in FIG. 1, the ultraviolet light irradiation device 100 includes a housing 11. The housing 11 has a light emission surface 12 through which ultraviolet light emits. Specifically, an aperture 11a that serves as a light emission window through which ultraviolet light emits, is formed in the light emission surface 12. This aperture 11a is provided with a window member made of, for example, quartz glass, and ultraviolet light is emitted from the window member. The aperture 11a can also be provided with an optical filter or the like to block light having an undesirable wavelength band. An excimer lamp 20 is housed inside the housing 11 as an ultraviolet light source. The excimer lamp 20 may be, for example, a KrCI excimer lamp that emits ultraviolet light having a central wavelength of 222 nm. The ultraviolet light source is not limited to a KrCI excimer lamp; however, it can be any light source that emits ultraviolet light having a wavelength range of 190 nm to 240 nm. The housing 11 and the ultraviolet light source (excimer lamp 20) constitute the light source section.

The excimer lamp 20 is provided with a straight-tube discharge container 21 that is hermetically sealed at its both ends. The discharge container 21 can be made of quartz glass, for example. The inside of the discharge container 21 is filled with a rare gas and halogen as an emission gas. In the present embodiment, a krypton chloride (KrCl) gas is used as the emission gas. In this case, the peak wavelength of light emitted is 222 nm. The emission gas is not limited to the above; a krypton bromide (KrBr) gas can also be used as the emission gas. In the case of a KrBr excimer lamp, the peak wavelength of light emitted is 207 nm. In FIG. 1, the ultraviolet light irradiation device 100 includes the plurality of (three) discharge containers 21; however, the number of discharge containers 21 can be any number.

A pair of electrodes (a first electrode 22 and a second electrode 23) are arranged to be in contact with the outer front surface of the discharge containers 21. The first electrode 22 and the second electrode 23 are arranged in the opposite surface (surface in the -Z direction) with respect to a light extraction surface in the discharge container 21, and are spaced apart from each other in the tube axial direction (the Y direction) of the discharge container 21. The discharge containers 21 are then arranged in a manner that they straddle these two electrodes 22 and 22 while being in contact with them. Specifically, the two electrodes 22 and 23 have concave grooves formed therein, and allow the discharge containers 21 to be fitted into the concave grooves of the electrodes 22 and 23.

Of this pair of electrodes, one electrode (e.g., the first electrode 22) is a high-voltage electrode and the other electrode (e.g., the second electrode 23) is a low-voltage electrode (ground electrode). The lamp is lit by applying a high-frequency voltage between the first electrode 22 and the second electrode 23.

The light extraction surface of the excimer lamp 20 is disposed opposite the light emission window. Hence, light emitted from the excimer lamp 20 is emitted from a light emission surface 12 of the ultraviolet light irradiation device 100 through the light emission window. Here, the electrodes 22 and 23 may be made of a metal that has reflectivity to the light emitted from the excimer lamp 21. This configuration allows the light emitted from the discharge container 21 in the -Z direction to be reflected and travel in the +Z direction.

The aperture 11a, which serves as a light emission window, can be provided with an optical filter as described above. The optical filter can be a wavelength selection filter that transmits light having a wavelength range of 190 nm to 240 nm, which is less adverse effects on human bodies, (more preferably, light having a wavelength range of 200 nm to 230 nm), blocks UVC light having a wavelength range of 240 nm to 280 nm. Specifically, the filter reduces the irradiance of ultraviolet light on each of the wavelength of 240 nm to 280 nm to 1% or less with respect to the irradiance of ultraviolet light having a peak wavelength in the a wavelength band of 190 nm to 240 nm when the ultraviolet light is incident onto the optical filter at an incident angle of 0 degree.

Examples of the wavelength selection filter include an optical filter provided with a dielectric multilayer film consisting of HfO₂ layers and SiO₂ layers. Examples of the wavelength selection filter also include an optical filter provided with a dielectric multilayer film consisting of SiO₂ layers and Al₂O₃ layers. Hence, even when light harmful to humans is emitted from the excimer lamp 20, providing the optical filter in the light emission window can reliably suppress the light from leaking out of the housing 11.

As shown in FIG.1, the ultraviolet light irradiation device 100 also includes a power supply section 15 and a controller 16. The power supply section 15 includes power supply components such as an inverter to which power is supplied from a power source and cooling components such as a heat sink to cool the power supply components. The controller 16 also controls the lighting of the excimer lamp 20 that constitutes the light source section.

In addition, the ultraviolet light irradiation device 100 may be provided with a detector 31 and a distance sensor 32. The detector 31 and the distance sensor 32 may be located, for example, near the light emission surface 12 of the housing 11. The detector 31 can be a human detection sensor that detects a person present in an area (irradiation area) irradiated with ultraviolet light emitted from the light emission surface 12. Examples of the human sensor include a pyroelectric infrared sensor that detects changes in heat (infrared radiation) emitted from human bodies and the like. When the detector 31 detects the presence of a person, it transmits a detection signal to the controller 16.

The distance sensor 32 detects a separation distance from the light emission surface 12 to a target object in a direction orthogonal to the light emission surface 12. Here, the target object includes a person, an animal, and an object. The distance sensor 32 can be, for example, an infrared sensor that includes an infrared light-emitting element such as an infrared LED and a light receiving element such as a photodiode, and detects the distance to the object by receiving the infrared light that is emitted from the infrared light-emitting element and reflected by the object with the light receiving element. When the distance sensor 32 detects an object facing the light emission surface 12, it transmits a detection signal to the controller 16. The distance sensor 32 is not limited to the infrared sensor described above; it can be any sensor as long as it can measure the separation distance from the object facing the light emission surface 12.

The controller 16 controls the amount of ultraviolet radiation emitted from the excimer lamp 20 based on the signals from the detector 31 and the distance sensor 32. Specifically, when the controller 16 receives a detection signal from the detector 31 indicating that the presence of a person is detected in the irradiation area, the controller 16 can control to reduce the amount of ultraviolet light radiation from the excimer lamp 20, or to stop the ultraviolet light radiation from the excimer lamp 20. Note that the controller 16 uses the detector 31 and the distance sensor 32 together to detect the presence of a person in the irradiation area with the detector 31, and when the controller 16 detects an object within a predetermined distance from the light emission surface 12 with the distance sensor 32, the control unit 16 may control to reduce the amount of ultraviolet light radiation from the excimer lamp 20, or to stop the ultraviolet light radiation from the excimer lamp 20.

### Verification 1

The following experiments were conducted to confirm the relationship between the amount of ultraviolet light irradiation (cumulative light intensity) and the mortality rate of insects.

### Example 1

As shown in FIG. 2, a PET case 301 was filled with 12 mosquitoes (female Aedes albopictus) 200. The opening of the PET case 301 was covered with a highly breathable mesh cloth 302, and the gap around the opening was sealed to prevent the mosquitoes 200 from escaping. Then, the lighting appliance 310 for emitting ultraviolet light toward the opening of the PET case 301 was mounted.

The lighting appliance 310 was provided with a KrCI excimer lamp having an emission wavelength band of 190 nm to 240 nm (main wavelength 222 nm). The lighting appliance 310 was provided with an optical filter that blocks ultraviolet light having a wavelength of 240 nm or more among ultraviolet light emitted from the KrCI excimer lamp. The light passing through the optical filter was irradiated toward the opening of the PET case 301. The irradiance (light intensity) of the irradiated ultraviolet light that has been transmitted through the cloth 302 was adjusted to be 25 µW/cm² at the bottom of the PET case 301. In addition, a nutrition member 303 was disposed inside the PET case 301 (at the bottom in FIG. 2) to serve as a source of nutrition for the mosquitoes 200. The nutrition member 303 was formed of cotton fabric impregnated with sugar water. Then, ultraviolet light was irradiated from the lighting appliance 310 toward the inside of the PET case 301 to examine the relationship between the amount of ultraviolet light irradiation (cumulative light intensity) at the bottom of the PET case 301 and the mortality rate of mosquitoes 200 immediately after the ultraviolet light irradiation.

### Comparative Example 1

Similar to Example 1, the PET case 301 as shown in FIG. 2 was filled with 12 mosquitoes (female Aedes albopictus) 200. The opening of the PET case 301 was covered with the highly breathable mesh cloth 302, and the gap around the opening was sealed to prevent the mosquitoes 200 from escaping. Then, the lighting appliance 310 for emitting ultraviolet light toward the opening of the PET case 301 was mounted.

The lighting appliance 310 was provided with a low-pressure mercury lamp emitting ultraviolet light having a main wavelength of 254 nm. The irradiance (light intensity) of the irradiated ultraviolet lightthat has been transmitted through the cloth 302 was adjusted to be 250 µW/cm² atthe bottom of the PET case 301. In addition, a nutrition member 303 was disposed inside the PET case 301 (atthe bottom in FIG. 2) to serve as a source of nutrition for the mosquitoes 200. The nutrition member 303 was formed of cotton fabric impregnated with sugar water. Then, ultraviolet light was irradiated from the lighting appliance 310 toward the inside of the PET case 301 to examine the relationship between the amount of ultraviolet light irradiation (cumulative light intensity) atthe bottom of the PET case 301 and the mortality rate of mosquitoes 200 immediately after the ultraviolet light irradiation.

### Verification result 1

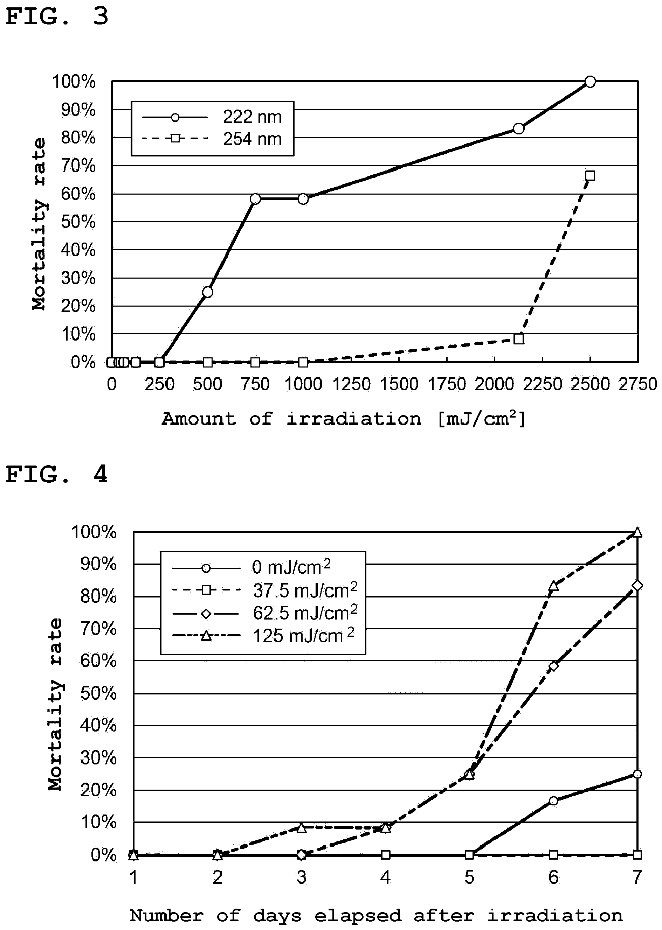

In Example 1 and Comparative Example 1, experiments were conducted until the amount of ultraviolet light irradiation (cumulative light intensity) reached 2500 mJ/cm². FIG. 3 illustrates the relationship between the amount of ultraviolet light irradiation (cumulative light intensity) and the mortality rate of mosquitoes. In FIG. 3, the solid line indicates the experiment result in Example 1 and the dashed line indicates the experiment result in Comparative Example 1. As shown in FIG. 3, Example 1 confirmed that the activity of mosquitoes was decreased with increasing the amount of ultraviolet light irradiation, and three mosquitoes were killed (mortality rate of 25 %) when the amount of ultraviolet light irradiation reached 500 mJ/cm². Seven mosquitoes were killed (mortality rate of 58%) when the amount of ultraviolet light irradiation reached 750 mJ/cm². Furthermore, all mosquitoes were killed (mortality rate of 100%) when the amount of ultraviolet light irradiation reached 2500 mJ/cm².

In contrast, in Comparative Example 1, none of the mosquitoes was killed when the amount of ultraviolet light irradiation was between 0 mJ/cm² and 2000 mJ/cm². One mosquito was killed when the amount of ultraviolet light irradiation reached 2125 mJ/cm². These results indicate that ultraviolet light having a wavelength band of 190 nm to 240 nm has a higher insecticidal effect than ultraviolet light having a main wavelength of 254 nm. In addition, the irradiation of ultraviolet light having a wavelength band of 190 nm to 240 nm results in decreasing the activity of mosquitoes, which infers that the underlying mechanism is a different insecticidal principle from the conventional one.

In the case of ultraviolet light irradiation at the main wavelength of 254 nm, the increase of the mortality rate of mosquitoes when the amount of ultraviolet light irradiation exceeds 2125 mJ/cm² can be attributed to multiple factors, such as metabolic abnormalities due to DNA breakage and protein destruction, inhibition of biological activity, and damage caused by burns. Notably, ultraviolet light having a main wavelength of 222 nm has an insecticidal effect on mosquitoes with an amount of ultraviolet light irradiation of 2000 mJ/cm² or less, which is not achievable with ultraviolet light having a main wavelength of 254 nm. This is considered to arise from the reason that ultraviolet light having a main wavelength of 222 nm more effectively causes metabolic abnormalities and burn injuries in mosquitoes than ultraviolet light having a main wavelength of 254 nm.

### Verification 2

In the case of using ultraviolet light having a main wavelength of 222 nm, it is confirmed that the mosquitoes were killed with a time lag even if they were not killed immediately after the irradiation of ultraviolet light. The following experiment was conducted to confirm the change in the mortality rate of mosquitoes after the ultraviolet light irradiation.

### Example 2

The PET case 301 shown in FIG. 2 was filled with 12 mosquitoes (female Aedes albopictus) 200. The opening of the PET case 302 was covered with a highly breathable mesh cloth 302, and the gap around the opening was sealed to prevent the mosquitoes 200 from escaping. Then, the lighting appliance 310 for emitting ultraviolet light toward the opening of the PET case 301 was mounted.

The lighting appliance 310 was provided with a KrCI excimer lamp having an emission wavelength band of 190 nm to 240 nm (main wavelength 222 nm). The lighting appliance 310 was provided with an optical filter that blocks ultraviolet light having a wavelength of 240 nm or more among ultraviolet light emitted from the KrCI excimer lamp. The light passing through the optical filter was irradiated toward the opening of the PET case 301. The irradiance (light intensity) of the irradiated ultraviolet light that has been transmitted through the cloth 302 was adjusted to be 25 µW/cm² at the bottom of the PET case 301. In addition, the nutrition member 303 was disposed inside the PET case 301 (at the bottom in FIG. 2) to serve as a source of nutrition for the mosquitoes 200. The nutrition member 303 was formed of cotton fabric impregnated with sugar water. Then, a predetermined amount of ultraviolet light was irradiated from the lighting appliance 310 toward the inside of the PET case 301 to examine a change in the mortality rate of mosquitoes 200 after the ultraviolet light irradiation. Here, the amount of ultraviolet light irradiation (cumulative light intensity) at the bottom of the PET case 301 was set to 250 mJ/cm² or less, at which no mosquito was confirmed to be killed immediately after the ultraviolet light irradiation. Specifically, the verification was conducted using four patterns of the amount of ultraviolet light irradiation of 0 mJ/cm² (non-irradiation), 37.5 mJ/cm², 62.5 mJ/cm², and 125 mJ/cm².

### Comparative Example 2

The PET case 301 as shown in FIG. 2 was filled with 12 mosquitoes (female Aedes albopictus) 200. The opening of the PET case 301 was covered with the highly breathable mesh cloth 302, and the gap around the opening was sealed to prevent the mosquitoes 200 from escaping. Then, the lighting appliance 310 for emitting ultraviolet light toward the opening of the PET case 301 was mounted.

The lighting appliance 310 was provided with a low-pressure mercury lamp emitting ultraviolet light having a main wavelength of 254nm. The irradiance (light intensity) of the irradiated ultraviolet lightthat has been transmitted through the cloth 302 was adjusted to be 250 µW/cm² atthe bottom of the PET case 301. In addition, a nutrition member 303 was disposed inside the PET case 301 (atthe bottom in FIG. 2) to serve as a source of nutrition for the mosquitoes 200. The nutrition member 303 was formed of cotton fabric impregnated with sugar water. Then, a predetermined amount of ultraviolet light was irradiated from the lighting appliance 310 toward the inside of the PET case 301 to examine a change in the mortality rate of mosquitoes 200 after the ultraviolet light irradiation. Here, the amount of ultraviolet light irradiation (cumulative light intensity) atthe bottom of the PET case 301 was set to 250 mJ/cm² or less, at which no mosquito was confirmed to be killed immediately after the ultraviolet light irradiation. Specifically, the verification was conducted using four patterns of the amount of ultraviolet light irradiation of 0 mJ/cm² (non-irradiation), 37.5 mJ/cm², 62.5 mJ/cm², and 125 mJ/cm².

### Verification result 2

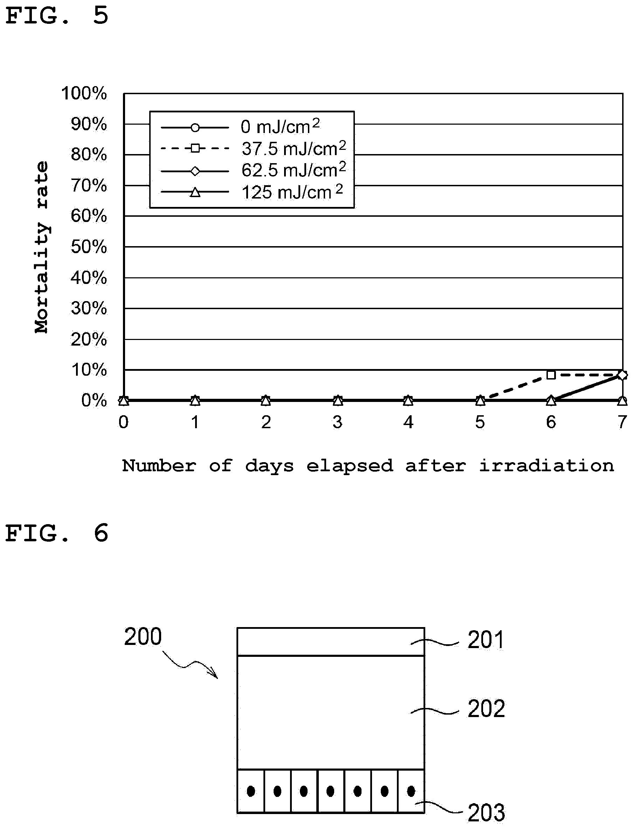

FIG. 4 indicates the experimental results of Example 2. FIG. 5 indicates the experimental results of Comparative Example 2. In FIGS. 4 and 5, the horizontal axis refers to the number of days elapsed after the ultraviolet light irradiation, and the vertical axis refers to the mortality rate of mosquitoes. As shown in FIG. 4, a large number of mosquitoes were found to be killed after a predetermined time has elapsed in the case of ultraviolet light having a main wavelength of 222 nm, even if no mosquito was killed immediately after the irradiation under the amount of ultraviolet light irradiation. This is a phenomenon that fails to occur with ultraviolet light irradiation atthe main wavelength of 254 nm as shown in FIG. 5. The experimental results shown in FIG. 4 indicates that ultraviolet light irradiation at a main wavelength of 222 nm can be expected to reduce a subsequent survival rate of mosquitoes by accelerating their metabolic abnormalities, even with a small amount of ultraviolet light irradiation. In other words, it indicates that pests can be exterminated with a time lag by the irradiation with a smaller amount of irradiation, temporary irradiation or intermittent irradiation, expecting to be more effective against, for example, pests that move around.

In addition, even when the amount of ultraviolet light irradiation per day (8 hours) was set to 22mJ/cm², which is the threshold limit value (TLV) on ultraviolet light having a wavelength of 222 nm based on the ACGIH (American Conference of Governmental Industrial Hygienists: ACGIH) or JIS Z 8812 (Measuring Methods of Eye-hazardous Ultraviolet Radiation), mosquitoes were confirmed to be killed by the irradiation for several days. Note that the above threshold limit value is a value currently adopted and may be revised in the future.

### Principle of Action

Insects have a cuticle on their outermost surface layer. FIG. 6 is a schematic diagram of the structure of the cuticle of an insect (pest) 200. The cuticle of the insect 200 has a two-layered structure constituted by a thin outer cuticle 201 made from protein and lipid and a thick inner cuticle made from protein and chitin. Here, chitin is a non-cellular layered structure secreted by dermal cells 203.

The cuticle is a wax layer covering the body surface of an insect, and its main component is hydrocarbons. Hydrocarbons, which are the main component of cuticle, are thought to be transported to the body surface by lipophorin (lipoprotein). Lipophorin also plays a role in the transport of lipid in insects and is a protein deeply involved in metabolism in insects. In this way, insects have no stratum corneum, which is unlike mammals. Hence, when an insect is irradiated with ultraviolet light, the proteins of the cuticle, which constitute its exoskeleton, are irradiated with ultraviolet light.

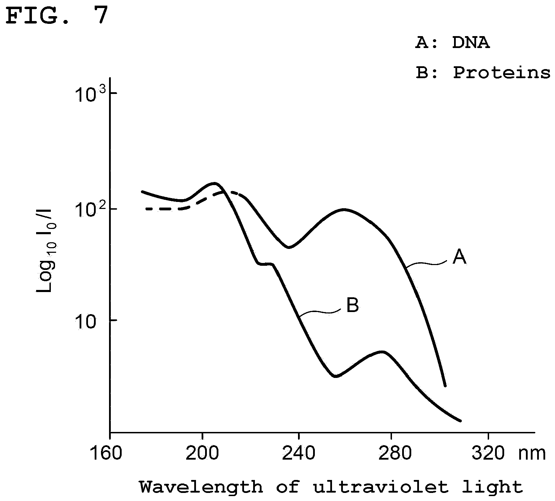

When the body surface (exoskeleton) of an insect is irradiated with ultraviolet light, proteins in the surface layer absorb the ultraviolet light. Here, ultraviolet light having a wavelength of 222 nm has an absorption coefficient of proteins approximately 10 times larger than that of ultraviolet light having a wavelength of 254 nm. Hence, ultraviolet light having a wavelength of 222 nm is more likely to be absorbed by proteins than ultraviolet light having a wavelength of 254 nm when the both ultraviolet light has same amount of irradiation. FIG. 7 is a graph illustrating the ultraviolet light absorption spectra of DNA and proteins. In FIG. 7, the curve A represents the ultraviolet light absorption spectrum of DNA and the curve B represents the ultraviolet light absorption spectrum of proteins. As is clear from FIG. 7, when the body surface (exoskeleton) of an insect is irradiated with ultraviolet light having a wavelength of 222 nm, the ultraviolet light is more effectively absorbed by the proteins on the body surface than when the body surface is irradiated with ultraviolet light having a wavelength of 254 nm.

Conventionally, the insecticidal effect of ultraviolet light has been thought to be caused by damage to insect DNA. As shown in FIG. 7, ultraviolet light having a wavelength of 222 nm has nearly the similar absorption coefficients of DNA to that of ultraviolet light having a wavelength of 254nm. However, ultraviolet light having a wavelength of 254 nm is less absorbed by proteins on the body surface, which allows the ultraviolet light to reach the dermal cells in the body, thereby being likely to damage DNA. In contrast, ultraviolet light having a wavelength of 222 nm is largely absorbed by proteins on the body surface, making the ultraviolet light difficult to penetrate into the body. Nevertheless, in the above experiment, the irradiation of ultraviolet light having a main wavelength of 222 nm has a higher insecticidal effect than the irradiation of ultraviolet light having a main wavelength of 254 nm. This is considered to be caused by the effect on the cuticle layer.

When the body surface (exoskelton) of an insect is irradiated with ultraviolet light, it is presumed that the proteins in the surface layer absorbs the ultraviolet light, which inhibits the insect's metabolism by preventing the activity of lipophorins that play a metabolic role, thereby producing an insecticidal effect. Specifically, it is presumed that ultraviolet light effectively being absorbed in the cuticle layer causes the degeneration of protein itself, and that ultraviolet light irradiation causes the enzymes present in the cuticle layer to release active oxygen species, which oxidize lipophorins, thereby inhibiting energy metabolism.

As described above, when the body surface (exoskeleton) of an insect is irradiated with ultraviolet light having a wavelength of 222 nm, the ultraviolet light is more effectively absorbed by the proteins on the body surface than when the body surface is irradiated with ultraviolet light having a wavelength of 254 nm. Hence, it can be inferred that the irradiation of ultraviolet light having a main wavelength of 222 nm acts on lipophorins more effectively than the irradiation of ultraviolet light having a main wavelength of 254 nm to achieve a higher insecticidal effect does.

In this way, the present inventor has obtained a new finding that irradiating with ultraviolet light having a shorter wavelength band (less than 240 nm) has a higher insecticidal effect than that by irradiating with ultraviolet light having a main wavelength of 254 nm, which causes DNA damage. This mechanism is presumed such that ultraviolet light effectively being absorbed in the proteins present in the body surface of an insect inhibits the activity of lipophorins. This insecticidal effect is an effect that is widely applicable to pests whose surface layer is constituted by a cuticle layer. Although different types of insects have a cuticle layer having different thickness, the similar insecticidal effect can be achieved for cockroaches and other pests.

The ultraviolet light irradiation device 100 according to the present embodiment irradiate pests with ultraviolet light having a wavelength of 190 nm to 240 nm, which has little adverse effect on human and animal cells and has a high insecticidal effect. This enables a higher insecticidal extermination effect compared to ultraviolet light irradiation at a wavelength of 254 nm. Here, the pests to be exterminated in the present embodiment are those whose surface layer is constituted by a cuticle layer, and include mosquitoes, chironomidae, flies, spiders, and cockroaches.

The ultraviolet light irradiation device 100 can be installed in any environment, such as indoors or outdoors. For example, the ultraviolet light irradiation device 100 can be installed such that a predetermined fixed area where pests are expected to come and go or settle is irradiated with ultraviolet light continuously or intermittently. The above fixed areas can includes streets, parking lots, plazas, and parks, which are located outdoor or semi-outdoor. Specifically, the above fixed areas can be areas including street lights, vending machines, ticket vending machines, windows and exterior walls of outdoor facilities, benches, and playground equipment.

The above fixed areas can also be set in pest entry pathways that are pathways that pests can enter (pathways that should be guarded against pest entry). The pest entry pathways include, for example, through-holes that communicate indoor areas with outdoor areas, such as windows (windows through which persons do not enter or exit), ventilation openings, air vents, and drainage openings in residential facilities. In this case, the ultraviolet light irradiation device 100 may perform the ultraviolet light irradiation directed to the pest entry pathways. Furthermore, the above fixed areas may be set in a pest entry prevention area that is an area pests are to be prevented from entering. The pest entry prevention areas include, for example, areas such as cargo compartments, shipping containers, and loading platforms of ships and aircraft.

The timing of the ultraviolet light irradiation by the ultraviolet light irradiation device 100 can be a time period when the pests are active or a timing when the risk level of the pest entry is high. For example, if the target pests are nocturnal, the ultraviolet light irradiation by the ultraviolet light irradiation device 100 may be performed during nighttime hours. For example, when the pest entry pathways are openable air vents or ventilation windows, the ultraviolet light irradiation by the ultraviolet light irradiation device 100 may be performed at a timing when the air vents or ventilation windows are open. This ensures that pests are irradiated with ultraviolet light to kill them, thereby effectively suppressing pest activity in the range of human activities.

The ultraviolet light irradiation device 100 may be provided with a detector such as a human detection sensor 31 for detecting the presence of a person, and detects the presence of a person in the ultraviolet light irradiation area, the amount of ultraviolet light radiation may be reduced compared to the case in which the detector detects no presence of a person or the ultraviolet light radiation may be stopped. Conversely, when the detector fails to detect the presence of a person in the ultraviolet light irradiation area, the ultraviolet light irradiation device 100 may increase the amount of ultraviolet light radiation compared to the case in which the detector detects the presence of a person.

Furthermore, the ultraviolet light irradiation device 100 may be provided with an insect attracting section that attracts pests. For example, since most pests have phototaxis, an insect attracting section including the attracting light source (attracting emission body) having a high insect attracting effect may be provided to irradiate the insect attracting section and at least part of its surrounding area with ultraviolet light. In the present embodiment, "phototaxis" refers to the behavior of insects that approach a light source in a manner that they are attracted to it. In addition to the behavior of moving toward the light source itself and settling at the light source itself, the phototaxis includes behaviors of approaching the light source as a result of light-dependent changes in the turning angle and speed of movements, the behaviors that appear to settle at the light source by settling to other light stimuli created by the light source in the surroundings (behaviors of approaching the surroundings of the light source by negative phototaxis), and behaviors of approaching the light source as a result of inhibiting movements due to dorsal light response or light-induced behavioral suppression.

By irradiating the insect attracting section and its surrounding area with ultraviolet light as described above, ultraviolet light can be radiated to pests attracted to the light source and the surroundings of the light source, effectively achieving the extermination of pests. The attracting effect of insects is considered to be related to their spectral luminous efficiency, which varies from insect to insect. The spectral luminous efficiency is considered to be high for ultraviolet light approximately having a wavelength of 300 nm to 400 nm and visible light having a wavelength of 450 nm to 550 nm. In the insect attracting section that uses light as an attracting element, environmental factors other than light, such as temperature, humidity, wind, atmospheric pressure, and weather conditions such as lightning and thunder are also considered to have an effect on the attracting effect. Hence, the insect attracting effect can be further enhanced by using the attracting emission bodies whose main emission band is included in the above wavelength band or by adjusting the environment other than light. Note that the main emission band refers to a wavelength band in which a light intensity of 50% or more with respect to the peak intensity in the intensity spectrum of the light emitted from the light source.

When used in combination with the insect attracting section, the ultraviolet light irradiation device 100 may irradiate the insect attracting section and its surrounding area with ultraviolet light while the insect attracting section is in operation (during the period when the attracting element is emitting). This enables the pests that have been attracted by the insect attracting section to be suitably irradiated with ultraviolet light. In addition, since the light source section of the ultraviolet light irradiation device 100 does not need to be constantly driven, the service life of the ultraviolet light source can be extended. Furthermore, the insect attracting section may intermittently emit the attracting element such as light to prevent the insect attracting section from attracting too many pests.

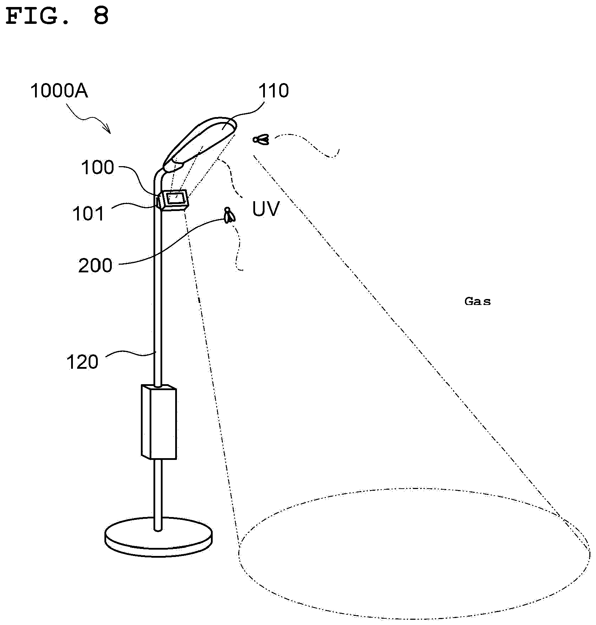

Hereinafter, an example of the pest extermination system according to the present embodiment will be explained. FIG. 8 illustrates an example of a pest extermination system 1000A when the ultraviolet light irradiation device 100 is mounted in a street light 120. The pest extermination system 1000A is provided with the ultraviolet light irradiation device 100 and an insect attracting section (insect attracting body) 110. Here, the insect attracting section 110 is a lighting fixture provided in a street light 120 mounted outdoors in streets, parking lots, plazas, parks, etc., and is turned on during nighttime hours.

The ultraviolet light irradiation device 100 is fixed to a pole of the street light 120, for example. Specifically, the ultraviolet light irradiation device 100 is provided with a supporter 101 by which the ultraviolet light irradiation device 100 is fixed near the upper end of the pole of the street light 120. The supporter 101 supports the ultraviolet light irradiation device 100 and adjusts the direction of the ultraviolet light radiation in a manner that the ultraviolet light UV is emitted upward (diagonally upward) from the ultraviolet light irradiation device 100. In this way, the ultraviolet light irradiation device 100 emits the ultraviolet light UV toward the insect attracting section (lighting fixture) 110 or its surrounding area. This enables the ultraviolet light UV to be suitably radiated to a pest 200 approaching the lighting fixture of the street light 120 and the pest 200 that settles on the lighting fixture.

The insect attracting section 110 has a light emission surface that emits light that includes light having an insect attracting effect. In the insect attracting section 110, the light emission surface has the highest brightness, thus readily attracting the pest 200. Hence, the ultraviolet light irradiation device 100 may be mounted in a manner that ultraviolet light is radiated to the light emission surface. Moreover, in accordance with the spectral luminous efficiency of the insects to be attracted, the light emitted from the insect attracting section 110 may include light having a wavelength that is more likely to attract the insects. This can enhance the insect attracting effect.

In addition, for making the insect more attracted, the insect attracting section 110 may also be operated in a lighting mode (hereinafter referred to as "insect control mode") in which the insect attracting effect is enhanced in a manner to coincide with a timing at which the insects are desired to be attracted. The "insect control mode" can be, for example, a mode in which the light intensity in the wavelength band matching the spectral luminous efficiency of the insect is intensified.

Furthermore, the controller 16 (see FIG. 1) of the ultraviolet light irradiation device 100 may control the lighting of the excimer lamp 20 (see FIG. 1) in a manner to coincide with the operation of the insect attraction section 110. Specifically, the controller 16 can control the lighting of the excimer lamp 20 such that ultraviolet light is emitted from the excimer lamp 20 during nighttime hours when the insect attracting section 110 is in operation. This enables ultraviolet light to be reliably radiated to the pest 200 that has been attracted by the insect attracting section 110. In addition, the controller 16 may control the lighting of the excimer lamp 20 such that the amount of ultraviolet light emitted from the excimer lamp 20 is increased while the insect attracting section 110 is operating in the insect control mode.

In the pest extermination system 1000A shown in FIG. 8, the insect attracting section 110 is a lighting fixture provided in the street light 120; however, an insect attracting section emitting an attracting element that attracts the pest 200 may be separately installed near the street light 120, for example, the ultraviolet light irradiation device 100. Alternatively, the ultraviolet light irradiation device 100 may also be provided with the insect attracting section. The attracting element in this case may be suitably selected to be light, scent, heat, or the like, depending on the pest 200 to be attracted.

In the pest extermination system 1000A shown in FIG. 8, the ultraviolet light irradiation device 100 is fixed near the upper end of the pole of the street light 120 and radiates the ultraviolet light UV upward. In other words, the ultraviolet light irradiation device 100 is configured so that the ultraviolet light UV is not radiated to a person present near the street light 120. Hence, in this case, the amount of ultraviolet light radiated from the ultraviolet light irradiation device 100 can be set to be relatively large. In addition, there is no need for the above-mentioned control in which the amount of ultraviolet light radiation is reduced or the emission of ultraviolet light is stopped when the detector 31 detects the presence of a person.

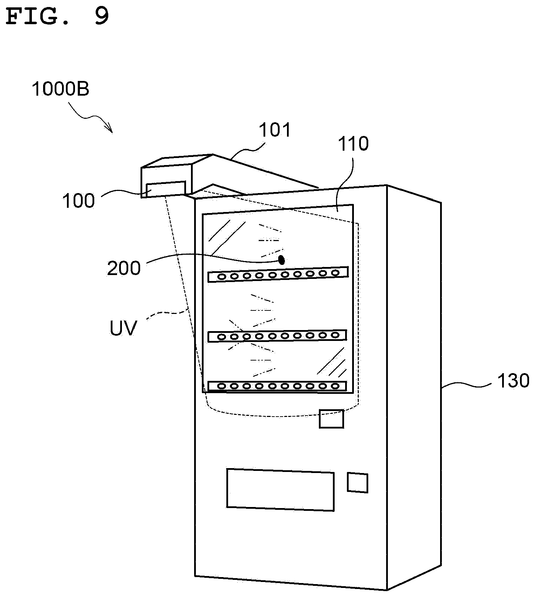

FIG. 9 illustrates a pest extermination system 1000B when the ultraviolet light irradiation device 100 is mounted in a vending machine 130. The pest extermination system 1000B is provided with the ultraviolet light irradiation device 100 and the insect attracting section (insect attracting body) 110. Here, the insect attracting section 110 is the light emission surface of the vending machine 130. The insect attracting section 110 can be, for example, a display surface constituted by a visible light-transmissive window.

The ultraviolet light irradiation device 100 is provided with the support 101, by which the ultraviolet light irradiation device 100 is fixed at the top of the vending machine 130, for example. The supporter 101 supports the ultraviolet light irradiation device 100 and adjusts the direction of the ultraviolet light radiation in a manner that the ultraviolet light UV is emitted downward (diagonally downward) from the ultraviolet light irradiation device 100. In this way, the ultraviolet light irradiation device 100 emits the ultraviolet light UV toward the insect attracting section 110 or its surrounding area. This enables the ultraviolet light UV to be suitably radiated to the pest 200 approaching the display surface of the vending machine 130 and the pest 200 that settles on the display surface.

The lighting mode of the insect attracting section 110 can be the same as that of the above-mentioned pest extermination system 1000A. The lighting control of the ultraviolet light irradiation device 100 can also be the same as that of the above-mentioned pest extermination system 1000A. Note that the attracting effect of insects depends on the difference in light intensity between the bright area of the insect attracting light source and its surrounding dark area. In nighttime, the attracting effect of insects is higher than that in daytime even though the same amount of visible light is radiated. Hence, for effectively exterminating pests, the controller 16 of the ultraviolet light irradiation device 100 may control the lighting of the excimer lamp 20 in a manner that the amount of ultraviolet light emitted from the excimer lamp 20 is increased during nighttime hours.

The controller 16 of the ultraviolet light irradiation device 100 may also control to reduce the amount of ultraviolet light from the excimer lamp 20 or to stop the radiation of ultraviolet light from the excimer lamp 20 when the detectors 31 detects the presence of a person in the ultraviolet light irradiation area. In order to effectively exterminate pests, the amount of ultraviolet light radiation is necessary to be set relatively high. However, a person can approach the display surface of the vending machine 130. In addition, when a person operates the pushbuttons or the like provided near the display surface, the person may be irradiated with the ultraviolet light emitted from the ultraviolet light irradiation device 100. Hence, the ultraviolet light irradiation device 100 preferably performs the lighting control such as reducing the amount of ultraviolet light radiation or stopping the ultraviolet radiation when the detector 31 detects the presence of a person. Although the description here refers to the vending machine 130, the same applies to automatic ticket vending machines.

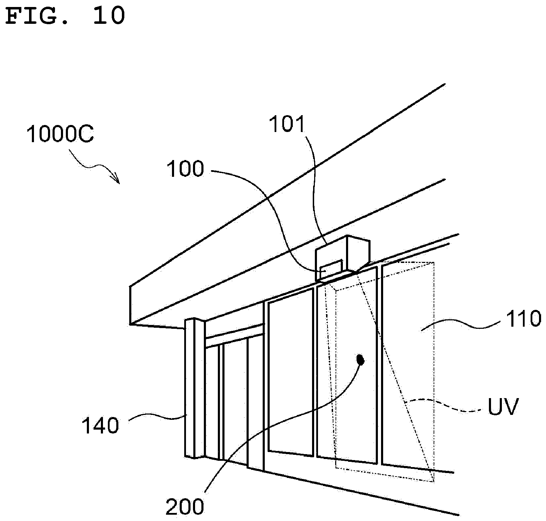

FIG. 10 illustrates an example of the configuration of a pest extermination system 1000C when the ultraviolet light irradiation device 100 is mounted in a convenience store 140. The pest extermination system 1000C is provided with the ultraviolet light irradiation device 100 and the insect attracting section (insect attracting body) 110. Here, the insect attracting section 110 is a light emission surface of the convenience store 140. The insect attracting section 110 can be, for example, a window surface that transmits visible light.

The ultraviolet light irradiation device 100 includes a supporter 101 by which the ultraviolet light irradiation device 100 is fixed to the upper part of a window frame of the convenience store 140, for example. The supporter 101 supports the ultraviolet light irradiation device 100 and adjusts the direction of the ultraviolet light radiation in a manner that the ultraviolet light UV is emitted downward (diagonally downward) from the ultraviolet light irradiation device 100. In this way, the ultraviolet light irradiation device 100 emits the ultraviolet light UV light toward the insect attracting section 110 or its surrounding area. This enables the ultraviolet light UV to be suitably radiated to the pest 200 approaching the window and the pest 200 that settles on the window, the pests 200 being attracted by light transmitted through the window surface during nighttime business and that.

The lighting mode of the insect attracting section 110 can be the same as that of the above-mentioned pest extermination system 1000B. The lighting control of the ultraviolet light irradiation device 100 can also be the same as that of the above-mentioned pest extermination system 1000B described. A person can approach the window surface of the convenience store 140. Hence, similar to the above-mentioned pest extermination system 1000B, the controller 16 of the ultraviolet light irradiation device 100 may reduce the amount of ultraviolet light from the excimer lamp 20 or stop the radiation of ultraviolet light from the excimer lamp 20 when the detector 31 detects the presence of a person in the ultraviolet light irradiation area. Although the description here refers to the convenience store 140, the same applies to supermarkets, drugstores, and other stores that are open during nighttime hours and have window surfaces that transmit visible light.

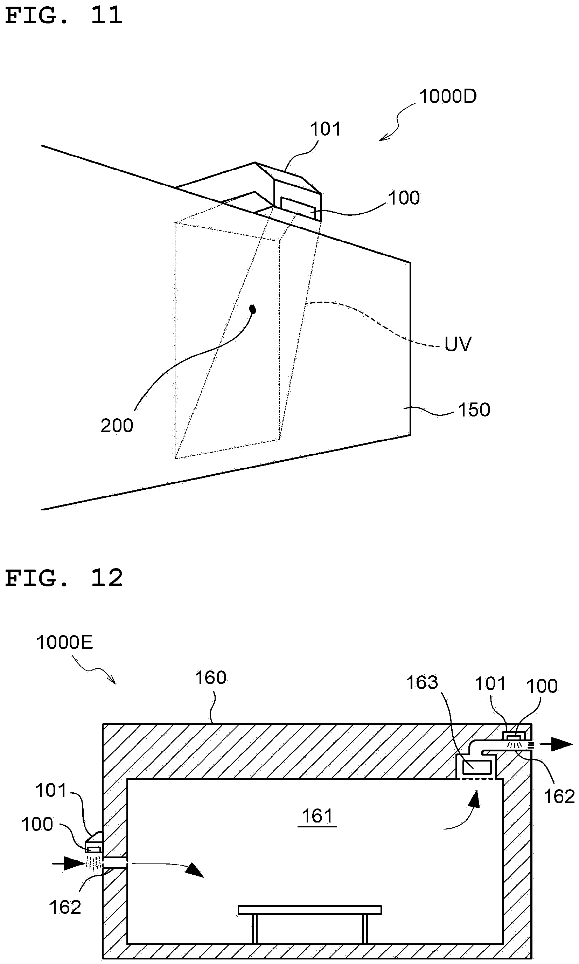

FIG. 11 illustrates an example of the configuration of the pest extermination system 1000D when the ultraviolet light irradiation device 100 is mounted on an outdoor wall 150. The pest extermination system 1000D is provided with the ultraviolet light irradiation device (pest extermination device) 100. The ultraviolet light irradiation device 100 is provided with the supporter 101 by which the ultraviolet light irradiation device 100 is fixed to the top of the wall 150, for example. The supporter 101 supports the ultraviolet light irradiation device 100 and adjusts the direction of the ultraviolet light radiation in a manner that the ultraviolet light UV is emitted downward (diagonally downward) from the ultraviolet light irradiation device 100. In this way, the ultraviolet light irradiation device 100 emits the ultraviolet light UV toward the wall surface or its surrounding area. This enables the ultraviolet light UV to be suitably radiated to the pest 200 approaching the wall surface and the pest 200 that settles on the wall surface, exterminating the pest 200.

Here, the wall 150 may be a wall of stores or a wall with posters or other display materials. In this case, ruining scenery can be suitably avoided. Although the description here refers to the outdoor wall 150, the same applies to structures mounted outdoors where pests can settle, such as benches or playground equipment in a park.

FIG. 12 illustrates an example of the configuration of a pest extermination system 1000E when the ultraviolet light irradiation device 100 is mounted in a residential facility 160. The pest extermination system 1000E is provided with the ultraviolet light irradiation device (pest extermination device) 100. The ultraviolet light irradiation device 100 is provided with the supporter 101 by which the ultraviolet light irradiation device 100 is fixed near the opening of a through-hole 162 provided in the residential facility 160 or in the middle of the path of the through-hole 162. Specifically, the supporter 101 supports the ultraviolet light irradiation device 100 and adjusts the direction of the ultraviolet light radiation in a manner that the ultraviolet light is emitted into the interior of the through-hole 162 from the ultraviolet light irradiation device 100.

The through-hole 162 is a hole that communicates an outdoor area with an indoor area, such as an air vent provided in a wall of the residential facility 160 or a ventilation opening where a ventilation fan 163 is mounted. Note that the through-hole 162 may also be a drainage opening or a window through which no person enters or exits. The through-hole 162 is an area that can be a pest entry pathway for pests into a residential space 161. Irradiating such pest entry pathways with ultraviolet light enables pests attempting to enter the residential space 161 to be irradiated with the ultraviolet light, thereby expecting an effect of preventing pests from entering the residential space 161. Even if the pests are not killed before entering the residential space 161, the ultraviolet irradiation can weaken the pests, thus suppressing the activity of the pests in the residential space 161.

Here, when the ultraviolet light irradiation device 100 is mounted near the opening of the through-hole 162, the ultraviolet light irradiation device 100 may be fixed to an outer wall of the residential facility 160 or to an inner wall thereof. When the ultraviolet light irradiation device 100 is fixed to the outer wall of the residential facility 160, it will not be obstructed in the residential space 161, and can suppress the ultraviolet light from unintentionally being irradiated to a person.

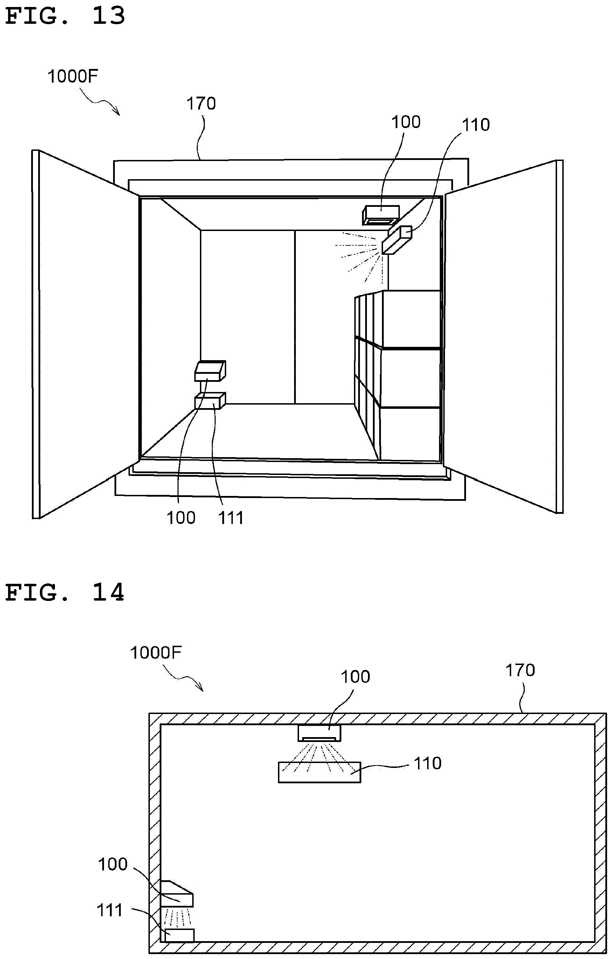

FIGS. 13 and 14 illustrate examples of the configuration of a pest extermination system 1000F when the ultraviolet light irradiation device 100 is installed in a shipping container (container) 170 for transporting cargos. The pest extermination system 1000F includes the ultraviolet light irradiation devices 100, and the insect attracting sections (insect attracting bodies) 110, 111. Here, the insect attracting section 110 can be a light irradiation device provided with a light emission surface that emits light including light having a wavelength band that matches the spectral luminous efficiency of the insect to be attracted. The insect attracting section 111 can be a fragrance generator that emits an odor that induces an attracting behavior of the insects to be attracted.

Each of the ultraviolet light irradiation devices 100 is fixed near the respective insect attracting sections 110, 111, and irradiates the insect attracting sections 110, 111 and their surrounding areas with ultraviolet light. The ultraviolet light irradiation device 100 and the insect attracting sections 110, 111 may be mounted at any location inside the container 170 (inside a housing space in which cargos are housed), such as walls, floors, or ceilings. This enables ultraviolet light to be suitably radiated to the pests that have been attracted by the insect attracting sections 110, 111. Note that the ultraviolet light irradiation device 100 and the insect attracting sections 110, 111 may be mounted on a single device that constitutes a single pest extermination device.

The ultraviolet light irradiation device 100 and insect attracting sections 110, 111 may be operated (driven) during the transportation process of the container 170. The container 170 remains closed during transportation. Hence, operating the ultraviolet light irradiation device 100 and the insect attracting sections 110, 111 during transportation enables pests to be suitably irradiated with ultraviolet light in a space where no person is present. This can make the amount of ultraviolet light emitted from the ultraviolet light irradiation device 100 be set to be relatively large. Accordingly pests and exotic species that are present in the container 170 can be exterminated. For example, the controller can control the ultraviolet light irradiation device 100 and the insect attracting sections 110, 111 to be operated (driven) at a predetermined timing after the door in the container 170 is closed. The controller, after the door in the container 170 is closed, may also receive an external signal that is sent by an operator at any timing to execute the operation of the ultraviolet light irradiation device 100 and the insect attracting section 110, 111, and control to perform the operation.

As described above, the pest extermination system according to the present embodiment is provided with the insect attracting section (insect attracting body) 110 that attracts insects to be exterminated, and the ultraviolet light irradiation device 100 that irradiates the insect attracting section 110 and at least part of its surrounding area with ultraviolet light having a wavelength of 190 nm or more to less than 240 nm. Here, the insect attracting section 110 can include the lighting fixture of the street light 120, the display surface of the vending machine 130, and the display surface of the convenience store 140. This enables ultraviolet light to be suitably radiated to pests that has been attracted using phototaxis possessed by pests.

The ultraviolet light irradiation device 100 according to the present embodiment is provided with the light source section (housing 11 and excimer lamp 20) that emits ultraviolet light having a wavelength of 190 nm or more to less than 240 nm, and the supporter 101 that supports the light source section in a manner that the ultraviolet light is radiated to a fixed area where insects to be exterminated can come and go and/or settle. Here, the area where insects to be exterminated can come and go and/or settle can include the window surface of the convenience store 140, the outdoor wall 150, an outdoor area or semi-outdoor area such as the through-hole 162, which communicates an indoor area with an outdoor area, including a ventilation opening and an air vent, or a heat dissipation area where its temperature is higher than outdoor air temperature. This enables ultraviolet light to be radiated to areas where pests are likely to settle or areas that may serve as pest entry pathways, thereby suitably irradiating pests with ultraviolet light.

Irradiating a pest with ultraviolet light having a wavelength of 190 nm or more to less than 240 nm, such as 222 nm, effectively acts on a cuticle layer covering a pest's body surface, which in turn oxidizes lipophorins, thereby inhibiting energy metabolism, as described above. This provides a higher insecticidal extermination effect than that of the irradiation of ultraviolet light having a wavelength of 254 nm.

In addition, ultraviolet light irradiation with a wavelength of 254 nm achieves insecticidal effect by damaging the DNA of insects, but the damage is repaired (with photo reactivation) when exposed to visible light. In contrast, ultraviolet light irradiation with a wavelength of 222 nm oxidizes lipophorins and inhibits energy metabolism to achieve insecticidal effect, thus the above-mentioned photoreactivation fails to occur. Hence, the insecticidal extermination using ultraviolet light having a wavelength of 222 nm eliminates the need for radiating the amount of ultraviolet light irradiation necessary to kill the insects in a single irradiation. In other words, even if the amount of ultraviolet light irradiation at one time is relatively small, the insects will be killed when the cumulative light intensity reaches a predetermined amount by being irradiated with ultraviolet light over time.

As described in the present embodiment, irradiating insects by attracting them to a predetermined area with ultraviolet light, or irradiating a fixed area where insects can come and go or settle, enables the insects to be irradiated with ultraviolet light multiple times, thus the amount of ultraviolet light irradiation (cumulative light intensity) necessary to kill the insects can be readily achieved, thereby reliably killing or exterminating the insects.

Furthermore, in insecticidal extermination using ultraviolet light having a wavelength of 222 nm, the amount of ultraviolet light irradiation per day (8 hours) that is set to the threshold limit value (TLV) specified in the safety standard can kill insects in a few days. Therefore, this can be safely used in the range of human activities.

In addition, the insecticidal extermination using ultraviolet light having a wavelength of 222 nm kills insects by inhibiting their energy metabolism, thus fails kill them immediately. Even if ultraviolet light irradiation oxidizes lipophorins, which causes metabolic failure and weakens insects' activities, the insects can still move around for some time. Hence, since the insects are not killed immediately after ultraviolet light irradiation, a situation in which a large number of insect carcasses accumulate in the ultraviolet light irradiation area does not occur.

In this way, irradiating pests such as mosquitoes, chironomidae, flies, spiders, and cockroaches that have a cuticle layer on their surface layer with ultraviolet light having a wavelength of 190 nm to 240 nm effectively exterminates such pests. For example, since mosquitoes are known to carry infectious diseases such as Zika fever and dengue fever, they particularly have become a problem in recent years. The pest extermination system according to the present embodiment can be expected to be effective in reducing the number of vectors. In addition, shipping containers can be a factor in the spread of exotic species or the like because they carry goods to and from distant places such as overseas. However, the pest extermination system according to the present embodiment can suitably exterminate exotic organisms such as fire ants and mosquitoes carrying diseases, and is expected to be effective in suppressing the spread of exotic species and pathogens brought into the country from overseas.

As described above, the ultraviolet light irradiation device 100 according to the present embodiment can effectively achieve insecticidal effect while reducing harmfulness to human bodies.

### Modification example

In the above embodiment, the ultraviolet light irradiation device 100 may be a pest extermination device provided with an insect attracting section that emits an attracting element that attracts pests. Here, the insect attracting section can be provided with a light source (attracting emission body) that emits light that attracts insects, for example. In this case, the ultraviolet light irradiation device 100 can be provided with the above-mentioned attracting emission body in the housing 11, for example, and configured to emit light that attracts pests from the light emission surface 12.

Meanwhile, above embodiment describes the case in which the excimer lamp 20, which is an ultraviolet light source, has a pair of electrodes 22, 23 on one side of the discharge container 21 as shown in FIG. 1. However, the configuration of the excimer lamp is not limited to the above. For example, the excimer lamp may be configured with a pair of annular electrodes (first and second electrodes) arranged at both ends of a long discharge container. Also, the excimer lamp may be configured to include an inner electrode (first electrode) inside the long discharge container, and a mesh-shaped (mesh pattern) or linear-shaped outer electrode (second electrode) on the outer wall surface of the discharge container. As yet another example, the excimer lamp may have a so-called "flat tube structure", in which the first electrode and the second electrode are arranged on the respective two facing outer surfaces of the flat discharge container. As yet another example, the excimer lamp may have a so-called "double-tube structure", in which a cylindrical outer tube and a cylindrical inner tube are arranged. In this case, the excimer lamp is configured in the structure in which a mesh-shaped first electrode (external electrode) and a membrane-shaped second electrode (internal electrode) are arranged on the outer surface of the outer tube and the inner surface of the inner tube, respectively.

Furthermore, the above embodiment describes the case in which excimer lamps are used as the ultraviolet light source; however, LEDs can also be used as the ultraviolet light source. Examples of LEDs include aluminum gallium nitride (AlGaN)-based LEDs, aluminum nitride (AlN)-based LEDs, and magnesium zinc oxide (MgZnO)-based LEDs. AlGaN-based LEDs preferably adjust the composition of Al in a manner that its center wavelength is in the range of 190 to 235 nm. AlN-based LEDs emit ultraviolet light having a peak wavelength of 210 nm. Alternatively, MgZnO-based LEDs emit ultraviolet light having a central wavelength of 222 nm by adjusting the composition of Mg. When coherent light sources being used, a gas laser or a solid-state laser device may be employed to emit coherent ultraviolet light, or a wavelength conversion device, through which light emitted from a gas laser or a solid-state laser device is converted to generate a new coherent light having a different wavelength, may be employed to emit ultraviolet light having a wavelength band of 190 nm to 240 nm. Examples of the wavelength conversion element may include nonlinear optical crystals that makes light emitted from a laser element to increase its frequency to generate higher-order high-frequency waves such as second harmonic waves (SHG) and third harmonic waves (THG).

### Reference Signs List

- 11: Housing
- 12: Light emission surface
- 15: Power supply section
- 16: Controller
- 20: Excimer lamp
- 31: Detector
- 32: Distance sensor
- 100: Pest extermination device (Ultraviolet light irradiation device)
- 110: Insect attracting section
- 120: Street light
- 130: Vending machine
- 140: Convenience store
- 150: Wall
- 160: Residential facility
- 161: Residential space
- 170: Shipping container (container)
- 200: Pest
- 201: Outer cuticle
- 202: Inner cuticle
- 203: Dermal cells
- 1000A to 1000F: Pest extermination system

## Claims

1. A pest extermination device (100) comprising:
an insect attracting section (110) that emits an attracting element that attracts an insect to be exterminated;
a light source section that emits ultraviolet light having a wavelength of 190 nm or more and less than 240 nm to the insect attracting section (110) and at least part of its surrounding area; and
a controller (16) that controls the lighting of the light source section.

2. The pest extermination device (100) according to the claim 1, wherein the insect attracting section (110) includes an attracting emission body whose main emission band is contained in a wavelength band of 300 nm to 400 nm, or a wavelength band of 450 nm to 550 nm.

3. The pest extermination device (100) according to the claim 1, wherein the controller (16) controls the lighting of the light source section such that the light source section emits the ultraviolet light at least during a period when the insect attracting section (110) emits the attracting element.

4. The pest extermination device (100) according to the claim 1, wherein the insect attracting section (110) intermittently emits the attracting element.

5. The pest extermination device (100) according to the claim 1, wherein the light source section and the insect attracting section (110) are mounted inside a shipping container for transporting cargos, and the controller (16) controls the lighting of the light source section such that the light source section emits the ultraviolet light during the transportation process of the shipping container.

6. A pest extermination device (100) comprising:
a light source section that emits ultraviolet light having a wavelength of 190 nm or more and less than 240 nm;
a supporter that supports the light source section such that a fixed area where an insect to be exterminated can come and go and/or settle is irradiated with the ultraviolet light; and
a controller (16) that controls the lighting of the light source section.

7. The pest extermination device (100) according to the claim 6, wherein the supporter supports the light source section such that the fixed area provided in outdoor areas or semi-outdoor areas is irradiated with the ultraviolet light.

8. The pest extermination device (100) according to the claim 6, wherein the supporter supports the light source section such that the fixed area including a heat dissipation area whose temperature is higher than outside air temperature is irradiated with the ultraviolet light.

9. The pest extermination device (100) according to the claim 6, wherein the fixed area includes a through-hole communicating an indoor area with an outdoor area, and the supporter supports the light source section such that the opening of the through-hole and at least part of the interior of the through-hole is irradiated with the ultraviolet light.

10. The pest extermination device (100) according to the claim 6, wherein the fixed area includes a wall surface, and the supporter supports the light source section such that the wall surface is irradiated with the ultraviolet light.

11. The pest extermination device (100) according to the claim 6, wherein the fixed area includes a window surface, and the supporter supports the light source section such that the window surface is irradiated with the ultraviolet light.

12. The pest extermination device (100) according to any one of the claims 1 to 11, further comprising a detector that detects a person present in an irradiation area of the ultraviolet light emitted from the light source section, and the controller (16) controls the lighting of the light source section such that when the detector detects the presence of a person, the amount of ultraviolet light emitted from the light source section is reduced compared to the case in which the detector detects no presence of a person, or the radiation of the ultraviolet light from the light source section is stopped.

13. The pest extermination device (100) according to any one of the claims 1 to 11, wherein the controller (16) controls the lighting of the light source section such that the ultraviolet light is emitted from the light source section at a predetermined timing when the insects can be present within the irradiation area of the ultraviolet light.

14. A pest extermination method comprising the step of:
emitting an attracting element that attracts an insect to be exterminated from an insect attracting body; and
irradiating the insect attracting body and its surrounding area with ultraviolet light having a wavelength of 190 nm or more and less than 240 nm.

15. A pest extermination system (1000A) comprising:
an insect attracting body emitting an attracting element that attracts insects to be exterminated; and
an ultraviolet light irradiation device (100) that irradiates the insect attracting body and at least part of its surrounding area with ultraviolet light having a wavelength of 190 nm or more and less than 240 nm.

16. The pest extermination system (1000A) according to claim 15, wherein the insect attracting body includes at least one of a lighting fixture, a vending machine (130), or a window surface transmitting visible light.
